(19) Europäisches Patentamt
European Patent Office
Office européen des brevets

(11) **EP 2 952 430 B1**

(12) **FASCICULE DE BREVET EUROPEEN**

(45) Date de publication et mention
de la délivrance du brevet:
**19.04.2017 Bulletin 2017/16**

(51) Int Cl.:
***B64C 25/40*** *(2006.01)*     ***B60T 8/32*** *(2006.01)*

(21) Numéro de dépôt: **15168699.5**

(22) Date de dépôt: **21.05.2015**

(54) **PROCÉDÉ DE GESTION DU FREINAGE D'UNE ROUE D'AÉRONEF**

BREMSSTEUERUNGSVERFAHREN EINES RADS EINES LUFTFAHRZEUGS

METHOD FOR MANAGING THE BRAKING OF AN AIRCRAFT WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2014 FR 1455182**

(43) Date de publication de la demande:
**09.12.2015 Bulletin 2015/50**

(73) Titulaire: **Safran Landing Systems**
**78140 Vélizy-Villacoublay (FR)**

(72) Inventeurs:
• **Jaber, Sylvain**
**78140 VELIZY-VILLACOUBLAY (FR)**
• **Cekic, Raffi**
**78140 VELIZY-VILLACOUBLAY (FR)**

(74) Mandataire: **Parzy, Benjamin Alain et al**
**Cabinet Boettcher**
**16, rue Médéric**
**75017 Paris (FR)**

(56) Documents cités:
EP-A1- 2 386 926     WO-A2-2007/120267
US-A1- 2007 235 267     US-A1- 2009 218 440

EP 2 952 430 B1

## Description

L'invention concerne un procédé de gestion du freinage d'une roue d'aéronef, ladite roue étant associée à des moyens d'entraînement en rotation de la roue incluant un moteur électrique.

### ARRIERE PLAN DE L'INVENTION

Un certain nombre de raisons poussent les constructeurs d'aéronefs à tenter de motoriser les roues des aéronefs, en utilisant notamment des actionneurs d'entraînement équipés de moteurs électriques. Une telle motorisation présente en effet des avantages environnementaux et économiques importants (réduction de la consommation de carburant, réduction du bruit pendant les phases de roulage, etc.), et permet de réaliser des fonctions nouvelles : manoeuvre de l'aéronef lorsque les moteurs de propulsions sont éteints, roulage en marche arrière, pilotage de l'aéronef au sol à distance, etc.

L'augmentation de la masse de l'aéronef résultant de l'intégration des actionneurs d'entraînement doit être maîtrisée et raisonnable, de manière à ne pas rendre négligeable le bénéfice en matière de consommation de carburant apporté par l'utilisation de ces actionneurs. Or, les vitesses de rotation auxquelles doivent être entraînées les roues de l'aéronef et les couples que doivent développer les actionneurs d'entraînement sont importants et nécessitent des actionneurs lourds.

La demande de brevet EP2386926A1 divulgue une roue d'aéronef comportant en outre des moyens d'entraînement de la roue incluant un moteur électrique destiné à entraîner la roue en rotation, ledit moteur électrique étant muni d'un capteur de position destiné à fournir des mesures de position angulaire d'un rotor du moteur.

La demande de brevet US2007235267 divulgue un procédé permettant d'ajuster un jeu de fonctionnement pour le système de freinage électromécanique d'un aéronef, dans lequel l'actionneur comprend un resolver permettant d'acquérir une position et une vitesse du rotor du moteur électrique.

### OBJET DE L'INVENTION

L'invention a pour objet de réduire la masse d'un aéronef comportant des roues motorisées.

### RESUME DE L'INVENTION

En vue de la réalisation de ce but, on propose un procédé de gestion du freinage d'une roue d'aéronef munie d'un frein, l'aéronef comportant des moyens de commande du frein adaptés à mettre en oeuvre une fonction d'anti-patinage de la roue requérant une estimation d'une vitesse de rotation de la roue, l'aéronef comportant en outre des moyens d'entraînement de la roue incluant un moteur électrique destiné à entraîner la roue en rotation, ledit moteur électrique étant muni d'un capteur de position destiné à fournir des mesures de position angulaire d'un rotor du moteur. Selon l'invention, le procédé comporte l'étape, pour mettre en oeuvre la fonction d'anti-patinage, d'estimer la vitesse de rotation de la roue à partir des mesures de position angulaire du rotor fournies par le capteur de position.

La réduction de la masse de l'aéronef est donc obtenue en mutualisant l'utilisation du capteur de position du moteur électrique des moyens d'entraînement de la roue. Plutôt que d'utiliser un tachymètre dédié à la fonction d'anti-patinage, on utilise pour mettre en oeuvre cette fonction le capteur de position du moteur électrique. Le procédé de gestion du freinage de l'invention permet donc de réduire le nombre d'équipements et de câbles intégrés dans les différents systèmes associés aux atterrisseurs de l'aéronef. On diminue ainsi l'impact de l'utilisation des moyens d'entraînement sur la masse de ces systèmes et donc sur celle de l'aéronef. On note que cette solution permet aussi d'améliorer la précision de la fonction d'anti-patinage, car les capteurs de position des rotors de moteurs électriques sont nettement plus précis que les tachymètres traditionnellement utilisés pour réaliser la fonction d'anti-patinage.

### BREVE DESCRIPTION DES DESSINS

L'invention sera mieux comprise à la lumière de la description qui suit en référence à la figure annexée, qui représente un aéronef ainsi qu'une vue de détail de l'aéronef montrant un atterrisseur principal portant deux roues freinées sur lesquelles le procédé de gestion de freinage de l'invention est mis en oeuvre.

### DESCRIPTION DETAILLEE DE L'INVENTION

En référence à la figure unique, l'invention est ici mise en oeuvre sur un aéronef 1 comportant un atterrisseur auxiliaire 2 et deux atterrisseurs principaux 3a, 3b.

On décrit l'invention en référence uniquement à l'atterrisseur principal 3a, l'intégralité de cette description étant applicable à l'autre atterrisseur principal 3b.

L'atterrisseur principal 3a est muni de deux roues 4. Des moyens d'entraînement en rotation 5 des roues 4 sont installés sur l'atterrisseurs principal 3a. Ces moyens d'entraînement 5, représentés schématiquement sur la figure, comportent pour chaque roue 4 un actionneur d'entraînement comprenant un moteur électrique 6 destiné à entraîner la roue 4 en rotation.

Les moteurs électriques 6 sont des moteurs électriques synchrones à aimants permanents. Les moteurs électriques 6 sont pilotés par un calculateur de pilotage 7 associé aux deux roues 4 de l'atterrisseur principal 3a. Le calculateur de pilotage 7 contient notamment, pour chaque moteur électrique 6, un onduleur de tension auto-piloté dont le fonctionnement nécessite de connaître à chaque instant la position d'un rotor du moteur électrique 6. Chaque moteur électrique 6 comporte à cet effet un capteur de position 8 relié au calculateur de pilotage 7 et destiné à fournir au calculateur de pilotage 7 des mesure de position angulaire du rotor du moteur électrique 6. Ce capteur de position 8 est ici un résolveur directement intégré à l'intérieur du moteur électrique 6.

On précise que, sur la figure, seules les connexions électriques reliant les capteurs de position 8 sont représentées, de manière à simplifier la représentation de l'atterrisseur principal 3a.

Pour freiner l'aéronef 1, chaque roue 4 de l'atterrisseur principal 3a est ici munie d'un frein électromécanique 11 comportant une couronne 12, des actionneurs électromécaniques 13 portés par la couronne 12, et une pile de disques carbone 14 constitués de rotors solidaires en rotation d'une jante de la roue 4 et de stators solidaires en rotation d'un tube de torsion de la roue 4. Les actionneurs électromécaniques 13 sont adaptés à appliquer sélectivement un effort de freinage sur la pile de disques 14 pour ralentir la rotation de la jante de la roue 4 et donc pour freiner l'aéronef 1.

Le freinage de l'aéronef 1 est commandé par des moyens de commande comprenant ici un calculateur de freinage 16 associé aux deux roues 4 de l'atterrisseur principal 3a. Le calculateur de freinage 16 est relié à deux boîtiers de contrôle (non représentés sur la figure) connectés aux actionneurs électromécaniques 13 d'une même roue 4, qui transforment une consigne de freinage fournie par le calculateurs de freinage 16 en une commande pour chaque actionneur électromécanique 13.

Le calculateur de freinage 16 est adapté à mettre en oeuvre, pour chacune des roues 4 de l'atterrisseur principal 3a, une fonction d'anti-patinage. La mise en oeuvre de cette fonction d'anti-patinage requiert d'estimer la vitesse de rotation de chaque roue 4. Cette estimation de la vitesse de rotation des roues 4 permet de déterminer si une roue 4 qui tourne est sur le point de se bloquer, et de réduire l'effort de freinage commandé pour que la roue 4 continue de tourner.

Dans le procédé de gestion du freinage de l'invention, pour une roue 4 donnée, la mise en oeuvre de la fonction d'anti-patinage utilise les mesures de position angulaire du rotor du moteur électrique 6 associé à ladite roue 4 pour estimer la vitesse de rotation de la roue 4.

Les capteurs de position 8 de chacun des moteurs électriques 6 des roues 4 de l'atterrisseur principal 3a sont connectés à cet effet au calculateur de freinage 16 associé aux roues 4 de l'atterrisseur principal 3a. La vitesse de rotation de chaque roue 4 est obtenue à partie de la vitesse de rotation du rotor associé, en tenant compte du rapport de réduction entre la roue 4 et le rotor. La vitesse de rotation du rotor, quant à elle, est obtenue par simple dérivation de la position angulaire du rotor selon la formule suivante :

$$Vrotor_n = \frac{\theta_n - \theta_{n-1}}{t_n - t_{n-1}},$$

où $Vrotor_n$ est la vitesse de rotation du rotor au temps $t_n$, $\theta_n$ est la position angulaire du rotor au temps $t_n$, et $\theta_{n-1}$ est la position angulaire du rotor au temps $t_{n-1}$.

L'invention n'est pas limitée au mode de réalisation particulier qui vient d'être décrit, mais, bien au contraire, couvre toute variante entrant dans le cadre de l'invention tel que défini par les revendications.

Bien que l'on ait utilisé ici pour décrire l'invention une architecture particulière et simplifiée du système de freinage et du système d'entraînement en rotation des roues, le procédé de l'invention est bien sûr applicable à tout aéronef dont au moins une roue freinée est associée à des moyens d'entraînement en rotation de la roue, lesdits moyens d'entraînement comportant un moteur électrique muni d'un capteur de position du rotor du moteur.

Bien que l'on ait indiqué que le capteur de position angulaire du rotor du moteur électrique est un résolveur, il est parfaitement possible de prévoir d'équiper le moteur d'un autre type de capteur de position : capteur à effet Hall, etc.

Enfin, le procédé de l'invention peut également être mis en oeuvre sur des atterrisseurs dont les roues sont munies de freins hydrauliques.

## Revendications

1. Procédé de gestion du freinage d'une roue (4) d'aéronef (1) munie d'un frein (11), l'aéronef comportant des moyens de commande du frein adaptés à mettre en oeuvre une fonction d'anti-patinage de la roue (4) requérant une estimation d'une vitesse de rotation de la roue (4), l'aéronef comportant en outre des moyens d'entraînement de la roue (4) incluant un moteur électrique (6) destiné à entraîner la roue (4) en rotation, ledit moteur électrique (6) étant muni d'un capteur de position (8) destiné à fournir des mesures de position angulaire d'un rotor du moteur (6), **caractérisé en ce que** le procédé comporte l'étape, pour mettre en oeuvre la fonction d'anti-patinage, d'estimer la vitesse de rotation de la roue (4) à partir des mesures de position angulaire du rotor fournies par le capteur de position (8).

2. Procédé de freinage selon la revendication 1, dans lequel le moteur électrique (6) est un moteur électrique synchrone à aimants permanents.

3. Procédé de freinage selon l'une des revendications précédentes, dans lequel le capteur de position (8) est un résolveur.

4. Procédé de freinage selon l'une des revendications 1 à 2, dans lequel le capteur de position (8) est un capteur à effet Hall.

**Patentansprüche**

1. Verfahren zum Steuern der Bremsung eines Rades (4) eines mit einer Bremse (11) ausgestatteten Luftfahrzeugs (1), wobei das Luftfahrzeug Steuermittel zum Steuern der Bremse umfasst, die dazu geeignet sind, eine Antischlupffunktion des Rades (4) auszuführen, die eine Schätzung einer Drehgeschwindigkeit des Rades (4) erfordert, wobei das Luftfahrzeug ferner Antriebsmittel zum Antrieb des Rades (4) umfasst, die einen Elektromotor (6) einschließen, der dazu bestimmt ist, das Rad (4) in Drehung anzutreiben, wobei der Elektromotor (6) mit einem Positionssensor (8) versehen ist, der dazu bestimmt ist, Messungen der Winkelposition eines Rotors des Motors (6) zu liefern, **dadurch gekennzeichnet, dass** das Verfahren zum Ausführen der Antischlupffunktion den Schritt des Schätzens der Drehgeschwindigkeit des Rades (4) anhand der von dem Positionssensor (8) gelieferten Messungen der Winkelposition des Rotors umfasst.

2. Bremsverfahren nach Anspruch 1, bei dem der Elektromotor (6) ein synchroner Elektromotor mit Dauermagneten ist.

3. Bremsverfahren nach einem der vorhergehenden Ansprüche, bei dem der Positionssensor (8) ein Koordinatenwandler ist.

4. Bremsverfahren nach einem der Ansprüche 1 bis 2, bei dem der Positionssensor (8) ein Hall-Effekt-Sensor ist.

**Claims**

1. Method for managing the braking of a wheel (4) of an aircraft (1) fitted with a brake (11), the aircraft comprising brake control means suited to implementing an anti-skid function of the wheel (4), requiring an estimate of a rotational speed of the wheel (4), the aircraft further comprising means of driving the wheel (4) including an electric motor (6) intended to drive the wheel (4) in rotation, the said electric motor (6) being fitted with a position sensor (8) intended to provide measurements of the angular position of a rotor of the motor (6), **characterized in that** the method comprises the step, for implementing the anti-skid function, of estimating the rotational speed of the wheel (4) from measurements of the angular position of the rotor which are supplied by the position sensor (8).

2. Braking method according to Claim 1, in which the electric motor (6) is a synchronous permanent magnet electric motor.

3. Braking method according to one of the preceding claims, in which the position sensor (8) is a resolver.

4. Braking method according to one of Claims 1 and 2, in which the position sensor (8) is a Hall-effect sensor.

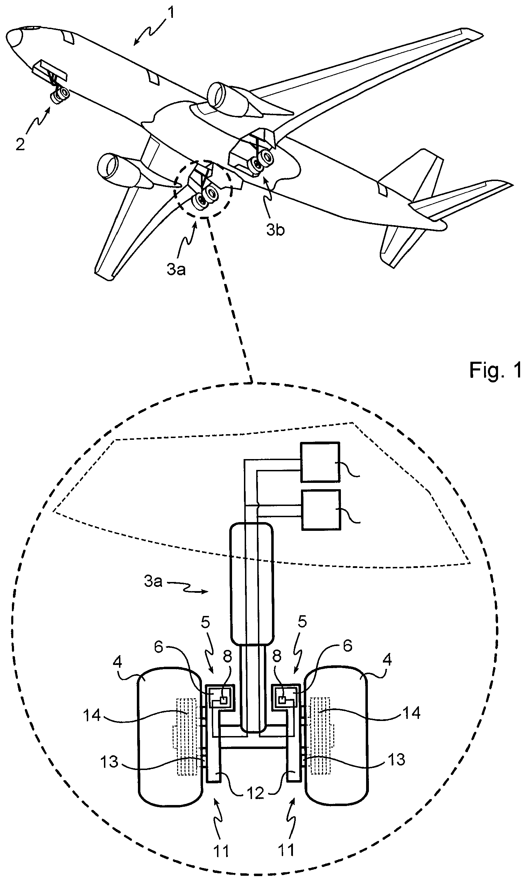

Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2386926 A1

- US 2007235267 A